**Europäisches Patentamt**

**European Patent Office**

**Office européen des brevets**

(19)

(11) Publication number: **0 055 783**

**A1**

# EUROPEAN PATENT APPLICATION

published in accordance with Art. 158(3) EPC

(12)

(21) Application number: **81902021.5**

(22) Date of filing: **10.07.81**

Data of the international application taken as a basis:

(86) International application number:
**PCT/JP81/00159**

(87) International publication number:
**WO82/00305 (04.02.82 82/04)**

(51) Int. Cl.³: **D 03 D 37/00**
**D 03 J 1/06, B 31 B 37/26**

(30) Priority: **11.07.80 JP 98693/80 U**

(43) Date of publication of application:
**14.07.82 Bulletin 82/28**

(84) Designated Contracting States:
**AT FR GB**

(71) Applicant: **TORII WINDING MACHINE CO., LTD.**
**377-2, Tsukiyamacho Kuze Minami-ku**
**Kyoto-shi Kyoto 601(JP)**

(72) Inventor: **TORII, Soichi**
**28, Shichikukamiumenoki-cho Kita-ku**
**Kyoto-shi Kyoto 603(JP)**

(74) Representative: **Arthur, Bryan Edward**
**Withers & Rogers 4 Dyer's Buildings Holborn**
**London EC1N 2JT(GB)**

(54) GUSSET FORMING DEVICE FOR CYLINDRICAL FABRIC IN CIRCULAR LOOM.

(57) A gusset forming device for forming gores at both sides (2a) of a cylindrical fabric (2) in a circular loom (1) having means (8) for flattening the cylindrical woven fabric (2). This device is disposed between a weaving region (4) and cylindrical fabric flattening means (8) and is constructed of a combination of inner guide means (35,37,39,41) for guiding the inner surface of the cylindrical fabric and outer guide means (63) for guiding the outer surface of the cylindrical fabric (2). The outer guide means (63) is disposed to be inserted into an imaginary square surrounded by the inner guide means (35,37,39,41) to urge and guide both sides (2a) of the cylindrical fabric (2) inwardly so as to form the gusset and accordingly the gores (2b).

EP 0 055 783 A1

Fig. 6

# DESCRIPTION

TITLE OF THE INVENTION

APPARATUS FOR FORMING GUSSETS IN

A TUBULAR FABRIC IN A CIRCULAR LOOM

TECHNICAL FIELD

This invention relates to a circular loom for weaving a tubular fabric, especially an apparatus for plaiting the tubular fabric to form gussets in the tubular fabric.

BACKGROUND ART

Circular looms for weaving a tubular fabric have been known, and as a typical instance of a circular loom, there can mentioned circular loom previously proposed by the inventor of the present application (for example, disclosed in United States Patent No. 3,871,413), or a circular loom manufactured by the British Company, Fairbairn Lawson Machinery Ltd. A tubular fabric woven by such a circular loom, utilizing tapes of synthetic resins, such as polypropylene and polyethylene resins, or synthetic resin strands, such as multifilament yarns or cords of synthetic resins, as warps and wefts, is strong and light in weight, and therefore, such a tubular fabric has been widely utilized for a bag for storing or transporting various kinds of materials, or a shopping bag.

Generally, storage or transport bags and shopping bags, in which both side edge portions are inwardly folded and plaited so as to form gussets, are widely utilized.

When a bag having gussets is filled with a material to be stored, the shape of the bag becomes like a cube or a rectangular solid. Therefore, it is easy to pile up such bags when loading, and to estimate the necessary area for the piled-up bags or the volume of the loaded bags. Thus, bags having gussets are very convenient if used to hold various grains and powders. Actually, a bag with gussets made of paper or woven fabric of synthetic tapes, can be used as a cement bag, a bag for fertilizers, a bag for grains, a bag for containing resin pellets, asbestos, dynamite, talc and the like. When such gussets are formed in a paper bag or a bag made of a plain woven fabric, gussets are formed during the affixing operation or the sewing operation by a gusset forming apparatus assembled in a machine for making a paper sheet or a plain woven fabric into a tube. Contrary to this, when a bag with gussets is made of a tubular fabric, in a conventional method, a woven tubular fabric is cut at a predetermined length, and thereafter, both side edge portions of each cut fabric are manually folded and plaited in order to form gussets. Accordingly, this conventional method requires human labor, and the productivity is low.

DISCLOSURE OF INVENTION

The principle object of the present invention is to provide an apparatus by which portions of a tubular fabric are folded inwardly, which portions will be both side edge portions when the tubular fabric is flattened, so as to form plaits, while the tubular fabric woven in a weaving zone of a circular loom is brought in contact with a flattening means, such as a woven fabric guide roller, pinch rollers, or a feed roller, disposed at a position above the weaving zone and flattened. By utilizing this apparatus, upon the manufacture of various kinds of storage bags, transport bags, and shopping bags, manual work for forming gussets at side portions is unnecessary, and accordingly, labor can be saved.

To achieve this object, in an apparatus for forming gussets in a tubular fabric according to the present invention, an inner guide means for defining four side edges of the tubular fabric is disposed between a weaving zone of a circular loom and a flattening means, and furthermore, an outer guide means for inwardly pressing the tubular fabric is associated with the inner guide means and is located at the inside of an imaginary rectangular shape enveloped by the inner guide means. As a result of the construction, the inner guide means guides the tubular fabric from its inside, and the outer guide means guides the tubular fabric from its outside, and the cooperation of both the guide means serves to form gussets in the tubular fabric.

BRIEF DESCRIPTION OF DRAWINGS

Fig. 1 is a perspective view of a tubular fabric having gussets at both side edges, which fabric is woven in a circular loom provided with an apparatus for forming gussets of the present invention;

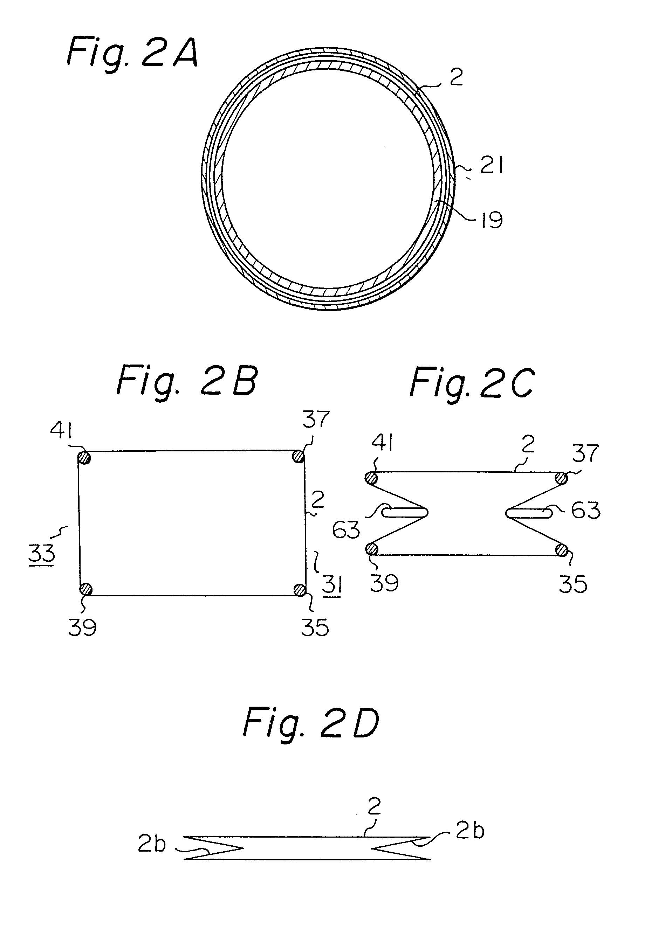

Figs. 2A through 2D are schematic plan views which successively illustrate steps for forming gussets in a tubular fabric, Fig. 2A illustrates the condition just after it is woven in a weaving zone, Fig. 2B illustrates the condition wherein the tubular fabric is guided by means of an inner guide means installed in an apparatus of the present invention, Fig. 2C illustrates a conditions wherein the tubular fabric is guided by means of the inner guide means and the outer guide means installed in the apparatus of the present invention, Fig. 2D illustrates the tubular fabric which has passed by a flattening means of the circular loom, and which is flattened and has gussets therein.

Fig. 3 is a perspective view of an embodiment of a circular loom wherein an apparatus for forming gussets of the present invention is installed. The outer guide means, however, is removed from Fig. 3 in order to facilitate clarification of the illustration;

Fig. 4 is a cross sectional view of a weaving zone of the circular loom illustrated in Fig. 3 and the lower part of the apparatus of the present invention, and some parts are omitted from Fig. 4;

Fig. 5 is a side view of an apparatus for forming gussets of the present invention;

Fig. 6 is a front elevational view of the apparatus illustrated in Fig. 5; and

Fig. 7 is a partial cross sectional view taken along line VII-VII in Fig. 6.

Best Mode for Carrying out the Invention

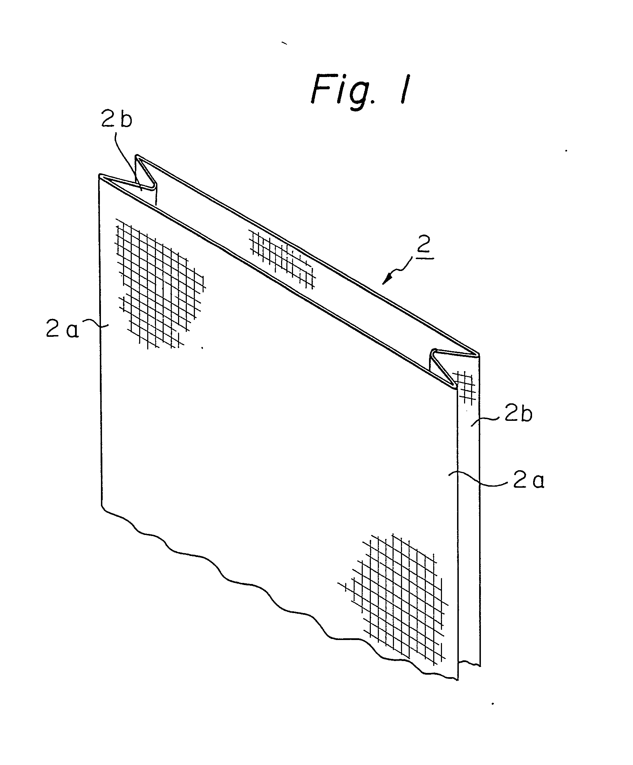

As illustrated in Fig. 1, a tubular fabric 2, woven in a circular loom provided with a gusset forming apparatus of the present invention, has a pair of gussets 2b at its side edge portions 2a.

Steps for forming the gussets 2b in the tubular fabric 2 will now be briefly explained with reference to Figs. 2A through 2D. The tubular fabric 2, which has been woven in a weaving zone of a circular loom, is delivered upwardly at a space between an inner guide ring 19 and an outer guide ring 21 of the circular loom as illustrated in Fig. 2A. Then, as illustrated in Fig. 2B, the tubular fabric 2 comes in contact with inner guide rods 35, 37, 39 and 41 of an apparatus for forming gussets of the present invention, and it is shaped into a rectangular shape. In addition, at an upper position, the tubular fabric 2 is guided by the inner guide rods 35, 37, 39 and 41 and outer guide rollers 63, as illustrated in Fig. 2C. The outer guide rollers 63 are arranged in such a manner that they are located inside of an imaginary rectangular shape defined by the four inner guide members 35, 37, 39 and 41. Accordingly, the opposite two side edges of the tubular fabric 2 are folded inwards. Thereafter, the tubular fabric 2 comes into contact with a feed roller or pinch rollers located at a position above the weaving zone and is flattened. As a result, as illustrated in Fig. 2D, gussets 2b are formed in the tubular fabric 2.

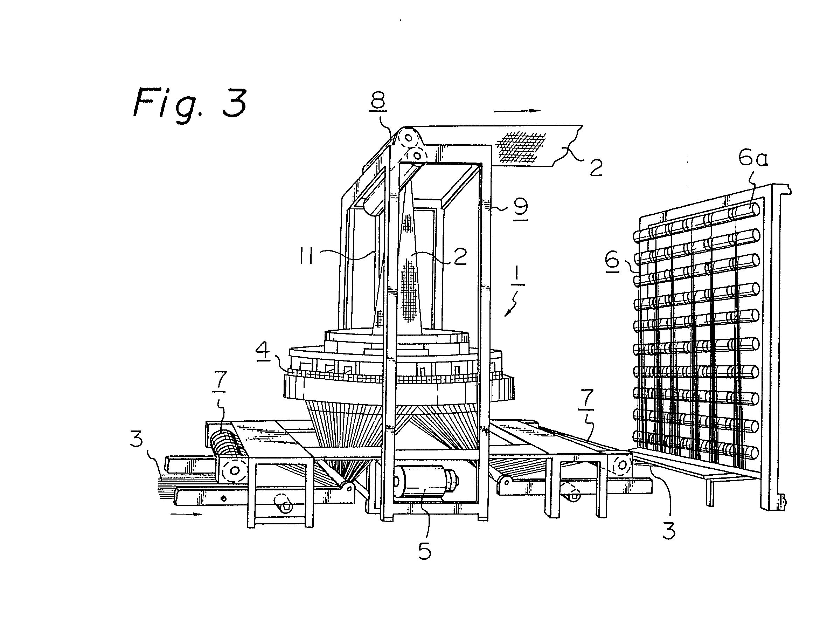

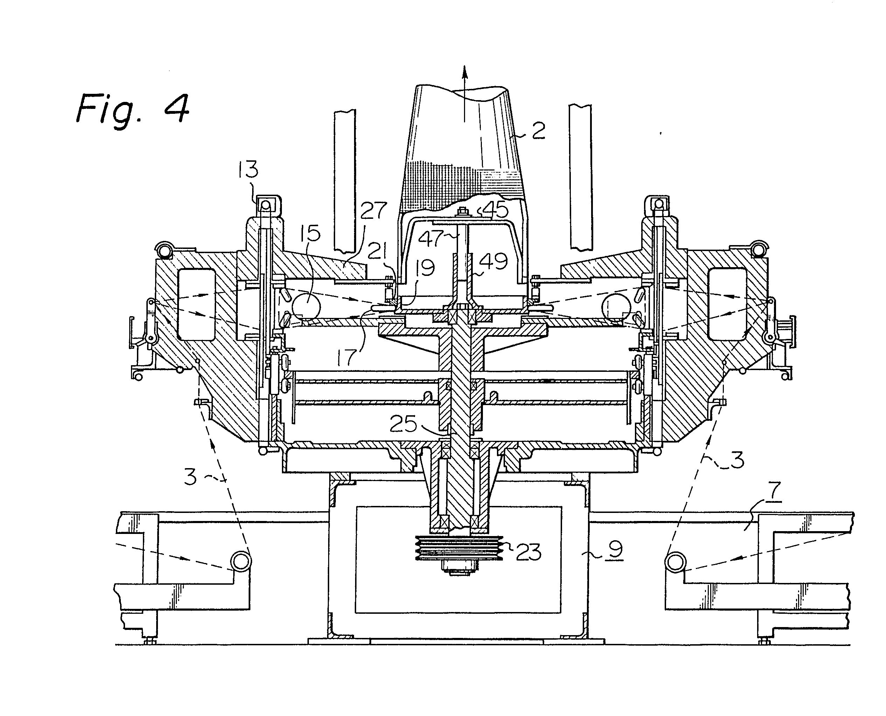

In order to facilitate the understanding of this gusset forming apparatus of the present invention which is installed in a circular loom, the circular loom provided with the apparatus will now be explained with reference to Figs. 3 and 4, prior to entering into the description of the structure, operation and effect of the apparatus. In the circular loom 1 illustrated in Fig. 3, a weaving zone 4, including a shed forming means and a filling means, is mounted within a frame 9, and the shed forming means and the filling means are driven by an electric motor 5, disposed at the lower portion of the frame 9, through a first power transmission mechanism (not shown). At a position above the weaving zone, a flattening means 8 for flattening the woven tubular fabric is disposed. The flattening means is, for example, a pair of pinch rollers, a feed roller, or a woven fabric take-out roller. When the flattening means 8 is constructed by a positively driven roller, the roller is driven through a second power transmission mechanism (not shown). The second power transmission mechanism is driven by the first power transmission mechanism through a driving transmission lever 11. Warps 3, in a number necessary for weaving a desirable tubular fabric 2, are fed to a pair of creels 6 disposed on both the sides of the weaving zone 4 symmetrically with each other with respect to the weaving zone 4 (only one creel is disposed on the right side is illustrated in Fig. 3), from a plurality of packages 6a rotatably mounted for feeding warps, and the warps 3 are fed to the weaving zone 4 through warp feed-out means 7. The tubular fabric 2 formed by the weaving opearation in the weaving zone 4 of the circular loom 1 is upwardly taken out by the flattening means 8 and guided to a winding means (not shown) in a direction indicated by an arrow.

As illustrated in Fig. 4, in the weaving zone, there are a shed forming means 13 for effecting shedding operation. of the warps 3, a filling means, i.e., a plurality of shuttles capable of travelling along an annular shuttle guide, and a shuttle propelling mechanism for moving these shuttles. These means are known since they are disclosed in, for example, U.S. Patent No. 3,871,413 issued to Torii, and therefore further detailed explanation thereof is omitted from this specification.

Weft withdrawn from the shuttle 15 is guided by a weft guide wheel affixed to the shuttle and is inserted into the shed of the warps while it is pressed to an inner guide ring 19. As a result, a tubular fabric 2 is formed. The woven tubular fabric is taken out upwardly through a space between the inner guide ring 19 and an outer guide ring 21.

The inner guide ring 19 is supported via a bearing on a vertical drive shaft 25 having a pulley 23 mounted at the lower end thereof, while the outer guide ring 21 is supported on the body 27 of the circular loom.

The apparatus for forming gussets of the present invention will now be explained with reference to Figs. 2B, 2C and 4 through 7.

The apparatus for forming gussets of the present invention comprises a combination of an inner guide means for guiding the inner surface of the tubular fabric 2 and an outer guide means for guiding the outer surface of the tubular fabric 2. The inner guide means has a purpose of guiding the portions 2a of the tubular fabric which will form the right and left side edges when the tubular fabric is flattened, and comprises guide assemblies 31 and 33, which are disposed symmetrically with each other at positions corresponding to the right and left side edges. Each of the guide assemblies includes two guide rods 35 and 37, or 39 and 41. The lower ends of the guide rods 35, 37, 39 and 41 of the guide assemblies 31 and 33 are swingably connected to brackets 45 by pins 43. The brackets 45 are connected to a rod 47, and the rod 47 is inserted onto and supported on a support sleeve 49 which is disposed on the upper portion of the vertical drive shaft 25 via a bearing.

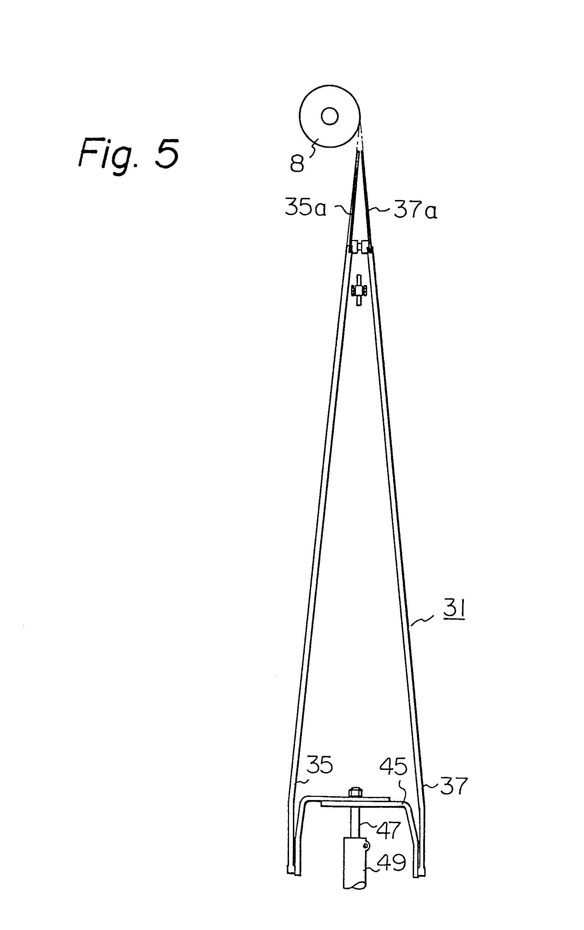

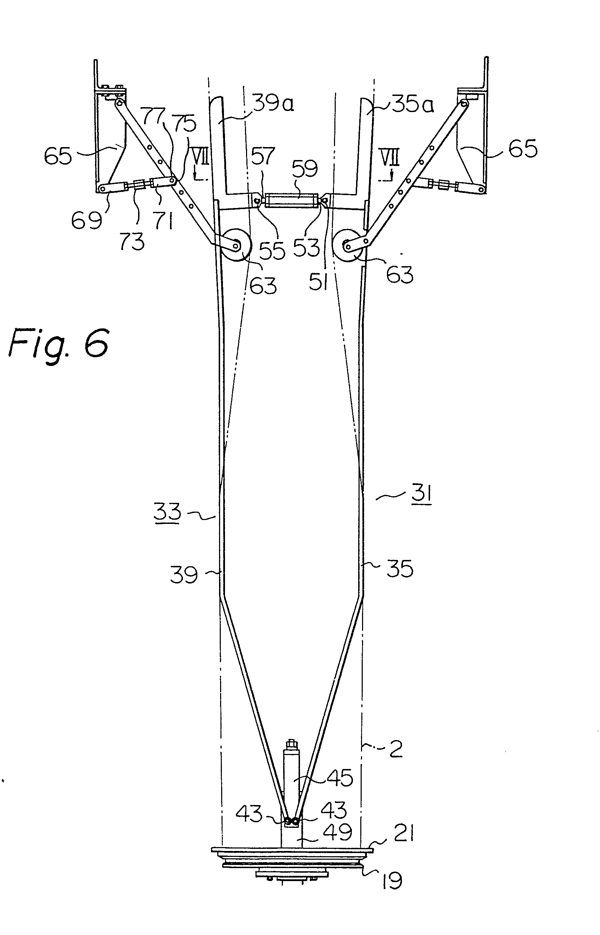

As illustrated in Fig. 5, the two guide rods 35 and 37 of the guide assembly 31 are connected to the opposite ends of the bracket 45 in such a manner that their lower ends are apart from each other by a certain distance, so that the distance between the guide rods is narrowed as they extend upwardly and so that their upper ends extend to positions adjacent to the flattening means 8. At the upper ends of the guide rods 35 and 37, they are closely located. It is preferable that the upper end portions 35a and 37 of the guide rods 35 and 37 are formed in a thin plate shape, as illustrated in Figs. 5 and 6, because they can guide woven fabric just before the flattening means 8.

The guide rods 39 and 41 of the other guide assembly are also arranged in a manner similar to the above-
-described guide rods 35 and 37.

As illustrated in Fig. 6, the lower ends of the guide
rods 35 and 39 of a pair of guide assemblies 31 and 33 are
pivoted to one side of the bracket 45. The guide rods 35
and 37 outwardly obliquely extend from their lower ends for
a certain length, and then, they substantially extend
straight upwardly. The outer guide rods 37 and 41 are
connected to the other side of the bracket 45 and extend
upwardly in such a manner similar to the guide rods 35 and
39.

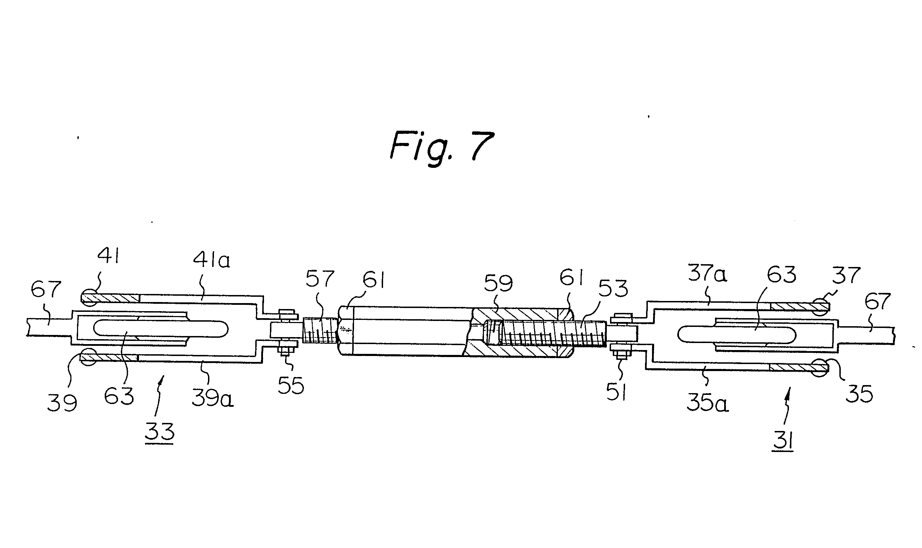

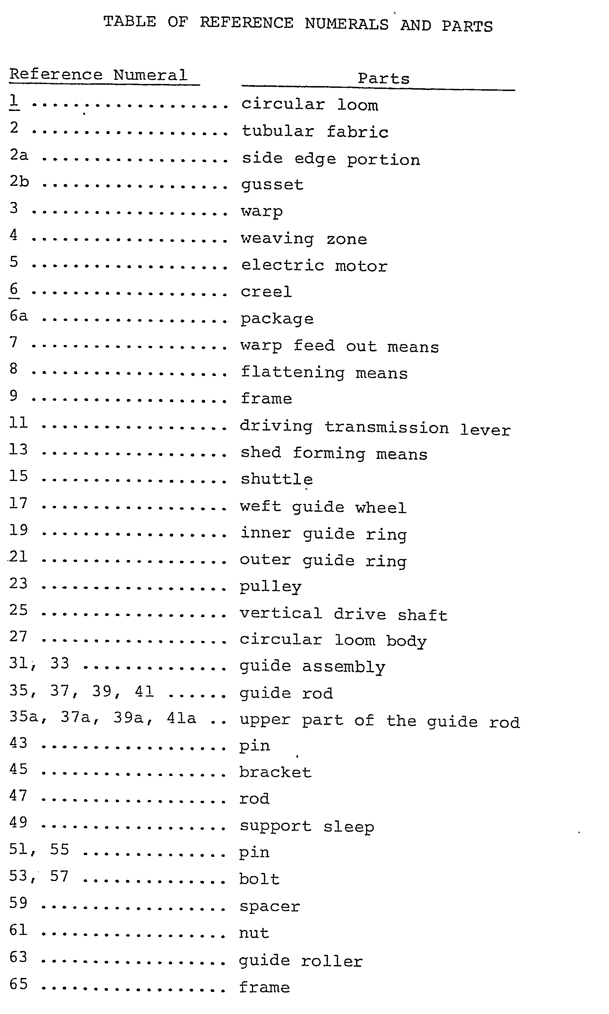

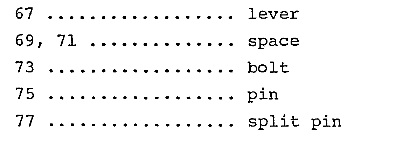

As illustrated in Fig. 7, a pair of guide assemblies
31 and 33 are connected to each other in such a manner that
the distance therebetween is adjustable.

The two guide rods 35 and 37 of the guide assembly 31
have upper ends 35a and 37a secured to a bolt 53 via a
pin 51, and the two guide rods 39 and 41 of the other guide
assembly 33 also have upper ends 39a and 41a secured to a
bolt 57 via a pin 55. The above-described two bolts 53 and
57 are threaded in directions opposite to each other. The
bolts 53 and 57 are engaged with a spacer 59 having ends
threaded in directions opposite to each other and are
secured by means of nuts 61. Thus the pair of guide
assemblies 31 and 33 are connected to each other via the
spacer 59, and the distance between the guide assemblies 31
and 33 can be changed by turning the spacer 59.
Accordingly, the width of the tubular fabric when it is
flattened can be adjusted.

As illustrated in Figs. 6 and 7, the outer guide means
of the gusset forming apparatus of the present invention
has two guide rollers 63 arranged associated with a pair of
guide assemblies. The guide rollers 63 are rotatably
supported on the front ends of levers 67 which are swingably
supported on frames 65. The frames 65 are appropriately
fixed on the frame illustrated in Fig. 3. The angular
position of the lever 67 is determined by means of a
spacer 69 pivoted to the frame 65, a spacer 71 pivoted to the lever 67 and a bolt 73 connecting the spacers 69 and 71. Both ends of the bolt 73 are threaded in directions opposite to each other. The angular position of the lever 67, and thus the position of the guide roller 63 relative to the inner guide assemblies 31 and 33, can be adjusted by turning the bolt 73. The lever 67 has a plurality of holes 68 formed therein, and the lever 67 and the spacer 71 are detachably connected to each other by means of a pin 75 inserted into one of the holes 68 and a split pin 77. Varying the connecting position of the pin 75, the position of the guide roller 63 can be adjusted.

As illustrated in Figs. 2C, 6 and 7, when the tubular fabric is guided, the guide rollers 63 are located at positions within an imaginary rectangular shape defined by the inner guide rods 35, 37, 39 and 41. In Fig. 6, the side edges of the tubular fabric is denoted by one-dot-and-one-dash lines, and the portions of the tubular fabric which are inwardly folded and which will form gussets are denoted by two-dot-and-a-dash lines.

The gusset forming apparatus of the present invention has a construction explained above and is disposed between the weaving zone 4 and the flattening means 8. Accordingly, the tubular fabric 2 withdrawn from the clearance formed between the inner guide ring 19 and the outer guide ring 21 comes into contact with the four inner guide rods 35, 37, 39 and 41, and it is expanded into a rectangular shape while it is guided upwardly. The outer guide rollers 63 serve to press inwardly the sides of the tubular fabric 2 and guides the tubular fabric from the outside, and accordingly, the sides of the tubular fabric are gradually folded inwardly. The tubular fabric which is being inwardly folded is then flattened by means of the flattening means 8, and plaits, i.e., gussets 2b, are formed. The size of the gussets 2b can be varied by adjusting the position of the guide rollers relative to the inner guide assemblies and by adjusting the distance between the two guide rods of each guide assembly.

CLAIMS

1.    Apparatus for forming gussets in a tubular fabric woven in a circular loom wherein the tubular fabric woven at the weaving zone of the circular loom is delivered to a flattening means located above the weaving zone, on which means the fabric is flattened, characterized by comprising:
          inner guide means, located between said weaving zone and said flattening means, for defining four side edges of said tubular fabric; and
          outer guide means, associated with said inner guide means and located at the inside of an imaginary rectangular shape defined by said inner guide means, for inwardly pressing said tubular fabric, whereby the cooperation of said outer guide means with said inner guide means serves to form gussets in said tubular fabric.

2.    Apparatus according to claim 1, wherein said inner guide means comprises a pair of guide assemblies, each assembly being composed of two guide members, extending for a predetermined length between said weaving zone and said flattening means.

3.    Apparatus according to claim 2, wherein the distance between the two assemblies is adjustable whereby the width of the flattened tubular fabric is adjustable.

4.    Apparatus according to claim 2 or 3, wherein said outer guide means comprises two rollers, each of which is located at a position between said guide members constituting said each assembly.

5.    Apparatus according to claim 4, wherein each of said rollers is rotatably supported or a swingably supported lever.

6.    Apparatus according to claim 4 or 5, wherein the position of each of said rollers relative to the corresponding guide assembly is adjustable whereby the depth of said gussets is adjustable.

*Fig. 1*

2

## Fig. 2A

2

21

19

## Fig. 2B

41

37

33

31

39

35

## Fig. 2C

41

2

37

63

63

39

35

## Fig. 2D

2

2b

2b

Fig. 3

0055783

Fig. 4

0055783

Fig. 5

8

35a ~ ~37a

31

35    45    37

47

49

6

Fig. 6

## Fig. 7

TABLE OF REFERENCE NUMERALS AND PARTS

| Reference Numeral | Parts |
| --- | --- |
| 1 | circular loom |
| 2 | tubular fabric |
| 2a | side edge portion |
| 2b | gusset |
| 3 | warp |
| 4 | weaving zone |
| 5 | electric motor |
| 6 | creel |
| 6a | package |
| 7 | warp feed out means |
| 8 | flattening means |
| 9 | frame |
| 11 | driving transmission lever |
| 13 | shed forming means |
| 15 | shuttle |
| 17 | weft guide wheel |
| 19 | inner guide ring |
| 21 | outer guide ring |
| 23 | pulley |
| 25 | vertical drive shaft |
| 27 | circular loom body |
| 31, 33 | guide assembly |
| 35, 37, 39, 41 | guide rod |
| 35a, 37a, 39a, 41a | upper part of the guide rod |
| 43 | pin |
| 45 | bracket |
| 47 | rod |
| 49 | support sleep |
| 51, 55 | pin |
| 53, 57 | bolt |
| 59 | spacer |
| 61 | nut |
| 63 | guide roller |
| 65 | frame |

67 .................. lever
69, 71 .............. space
73 .................. bolt
75 .................. pin
77 .................. split pin

## INTERNATIONAL SEARCH REPORT

International Application No. PCT/JP81/00159

**I. CLASSIFICATION OF SUBJECT MATTER** (if several classification symbols apply, indicate all) [3]

According to International Patent Classification (IPC) or to both National Classification and IPC

Int. Cl.$^3$  D03D 37/00, D03J 1/06, B31B 37/26

**II. FIELDS SEARCHED**

Minimum Documentation Searched [4]

| Classification System | Classification Symbols |
|---|---|
| I P C | D03D 37/00, D03J 1/06, B31B 37/26 |

Documentation Searched other than Minimum Documentation
to the Extent that such Documents are Included in the Fields Searched [5]

| | |
|---|---|
| Jitsuyo Shinan Koho | 1930 – 1981 |
| Jitsuyo Shinan Kokai Koho | 1971 – 1981 |

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| X | JP, A, 42-6550  Inada Seisakusho Kabushiki Kaisha  1967-3-16 | 1 – 3 |
| X | JP, A, 42-19207  Olin Mathison Chemical Corporation  1967-9-29 | 1 – 6 |

\* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search [2] | Date of Mailing of this International Search Report [2] |
|---|---|
| October 2, 1981 (02.10.81) | October 19, 1981 (19.10.81) |
| International Searching Authority [1] | Signature of Authorized Officer [20] |
| Japanese Patent Office | |

Form PCT/ISA/210 (second sheet) (October 1977)